# EUROPEAN PATENT APPLICATION

(11) **EP 2 784 186 A1**
(43) Date of publication of application: **01.10.2014**
(21) Application number: 13161325.9
(22) Date of filing: 27.03.2013
(51) Int. Cl.: C23G 1/36, C01B 21/38, C01B 7/19, C01B 13/18

(54) **Process for recovering metal oxide particles from a spent acid solution containing metal salts**

(71) Applicant: CMI UVK GmbH, 56410 Montabaur (DE)
(72) Inventor: Sehner, Egon, 56235 Ransbach-Baumbach (DE); Faber, Sergej, 65594 Runkel (DE); Marx, Thomas, 56427 Siershahn (DE)
(74) Representative: Schwöbel, Thilo K.

(57) **Abstract**

The present invention relates to a process for recovering metal oxide particles from a spent acid solution containing metal salts, the process comprising the steps of:
-- spraying the spent acid solution containing the metal salts into an inlet end of a first chamber of a spray roasting reactor to form droplets of the spent acid solution, wherein the first chamber has the inlet end at an upper portion, wherein a first heating zone is defined by the first chamber;
-- supplying a first heat source into the first chamber to the first heating zone, and heating the droplets in the first heating zone to a first temperature to evaporate liquid from the droplets to form dry particles of metal salts and to convert the particles of metal salts to particles of metal oxides;
-- directing the particles of metal oxides to a second chamber, wherein a second heating zone is defined by the second chamber;
-- supplying a second heat source into the second chamber to the second heating zone, wherein the second heating zone is positioned below and downstream of the first heating zone;
-- heating the particles of metal oxides, in the second heating zone, at a second temperature lower than the first temperature for a dedicated final conversion reaction;

## Description

### BACKGROUND

The present invention relates to a process for recovering metal oxide particles from a spent acid solution containing metal salts.

In pickling processes, metal surfaces are treated by removing impurities such as stains, inorganic contaminants, rust or scale using pickle liquors containing strong acids. These impurities may occur during metal forming processes, in particular rolling and/or heat treatment. To this end, strong acids, also called pickle liquor, are used to descale or clean the metal surfaces. For example nitric acid, hydrofluoric acid or mixtures of different acids may be used as pickling agents for pickling of ferrous metals, copper or aluminium alloys. The large amounts of spent acids are not only hazardous to the environment but usually also expensive. Thus it is desirable to regenerate the spent acids for reuse in various processes.

When acids are regenerated from metal ferrous solutions of acids or spent acids by spray rosting, the spent acids are typically atomized or sprayed into a heated reactor. To this end, fine droplets are generated at a top section of the reactor and fall freely to a lower section in the reactor while being heated by heating elements disposed in the reactor. Due to the free fall of the droplets, the spray rosting needs to be accomplished within seconds, wherein a pyrolytic decomposition of the droplets into vapour acids and metal oxides takes place. By spraying the spent acid through a furnace the various components are pyrolyzed or roasted to produce metal oxides and acid vapours. The acid vapours flow to the top section of the reactor and are withdrawn for a further acid regeneration step.

During the spray rosting, the decomposed metal oxides fall to the bottom section. Due to the short retention time in the reactor, residual acids remain bonded to the metal oxide, which results in a poor quality of the metal oxide. On the other hand, if the temperature is increased in the reactor such that no residual acids remain bonded, the quality of the metal oxides may worsen due to overheating. This problem may be overcome with very complicated constructions of reactors such that the evaporation step is conducted prior to the oxidation or decomposition step. Thus, the known processes involve either complicated reactor constructions with high emission values or the production of metal oxides of relative low quality. Furthermore, large amounts of hazardous waste water are produced during the acid regeneration.

### SUMMARY

It is therefore an object of the present invention to provide a simplified process for recovering metal oxides from a spent acid solution containing metal salts, wherein a good quality of metal oxides, high recovery efficiencies and a significant reduction of hazardous waste are achieved.
The object of the present invention is achieved by a process for recovering metal oxide particles from a spent acid solution containing metal salts, the process comprising the steps of:
-- spraying the spent acid solution containing the metal salts into an inlet end of a first chamber of a spray roasting reactor to form droplets of the spent acid solution, wherein the first chamber has the inlet end at an upper portion, wherein a first heating zone is defined by the first chamber;
-- supplying a first heat source into the first chamber to the first heating zone, and heating the droplets in the first heating zone to a first temperature to evaporate liquid from the droplets to form dry particles of metal salts and to convert the particles of metal salts to particles of metal oxides;
-- directing the particles of metal oxides to a second chamber, wherein a second heating zone is defined by the second chamber;
-- supplying a second heat source into the second chamber to the second heating zone, wherein the second heating zone is positioned below and downstream of the first heating zone;
-- heating the particles of metal oxides, in the second heating zone, at a second temperature lower than the first temperature for a dedicated final conversion reaction;
-- discharging the particles of meal oxides from the second heating chamber.

According to the present invention, it is thereby advantageously possible to reduce the energy consumption of the spray roasting reactor by performing the evaporation and conversion in the first heating zone in a single step. Thus, no further reaction zone with further heating elements is needed for the evaporation step. By using an atomizer for the production of fine and/or small droplets it is thereby further possible to enhance the evaporation process such that more energy is absorbed and, thus, more efficiently converted in the spray roasting process. Moreover, the energy absorption is increased without increasing the first temperature. In this way, overheating can be avoided and a better quality of metal oxides can be obtained. In particular, the second heating zone which is heated to a second temperature, lower than the first temperature, makes it possible to recover very pure metal oxides from the spent acid solution by removing remaining residue acids bonded to the metal oxide particles after the heating in the first heating zone. Preferably, a dedicated final conversion reaction takes place in the second heating zone, wherein the retention time of the metal oxide particles during the dedicated final conversion reaction in the second heating zone is less than 10 minutes. It is thereby advantageously possible to produce very pure metal oxides within high throughput speed.

According to a preferred embodiment of the present invention, a combined evaporation/conversion reaction takes place in the first chamber, wherein the first chamber is heated at a maximum temperature between 450 °C and 850 °C, preferred between 550 °C and 750 °C, more preferred approximately 650 °C.

According to the present invention, it is thereby advantageously possible to adjust the first temperature in the first heating zone to higher values as compared to the lower temperature in the final reaction zone such that very pure metal oxides can be produced. Moreover, by heating the first heating zone to the first temperature being sufficient for the decomposition, overheating of the metal oxides is advantageously avoided such that the quality of the metal oxides is further improved.

According to a preferred embodiment of the present invention, a dedicated final reaction takes place in the second chamber, wherein the second chamber is heated at a temperature that is approximately 50 °C to 200 °C lower than the temperature in the first chamber for the combined evaporation/conversion reaction.

According to the present invention, it is thereby advantageously possible to remove residual acids bonded to the metal oxides such that the quality of the metal oxides is further improved in the final reaction zone. It is furthermore advantageously possible to produce very pure metal oxides in a single step of evaporation and pyrolytic decomposition in the first reaction zone, because the residual acids bonded to the metal oxides are removed in the second reaction zone.

According to a preferred embodiment of the present invention, the energy input is carried out at different points along the path taken by the solution or the reaction products through the spray-roasting reactor for the various stages.

According to the present invention, it is thereby advantageously possible to recover metal oxides from the spent acid solutions by carrying out the energy input at different points along the path taken by the solution. Therefore, it is possible to simplify the control systems and/or feedback control systems that are configured to control the retention time and/or the temperatures in the heating zones.

According to a preferred embodiment of the present invention, the particles of metal oxides are sized and pushed from the first heating zone of the first chamber into the second heating zone of the second chamber by first raking elements disposed in the first chamber. It is further preferred according to the present invention, that the particles of metal oxides are discharged from the second chamber by second rake elements disposed in the second chamber.

According to the present invention, it is thereby advantageously possible to produce metal oxides with uniform sizes and shapes such that the further processing is enhanced. The sizing of the metal oxides during the spray roasting process allows for a further increased throughput speed and a simpler construction, because further means for the sizing of particles after the spray roasting process can be omitted.

The object of the present invention is further achieved by a spray roasting reactor for recovering metal oxide particles from a spent acid solution, wherein the spray roasting reactor comprises:
-- a first chamber having an inlet end and a vapour discharge end, wherein a first heating zone is defined by the first chamber;
-- a liquid supply at the inlet end for feeding the spent acid solution containing metal salts into the first chamber;
-- a first heat source coupled to the first chamber for heating the spent acid solution in the first heating zone to a first temperature to form metal salts and to convert the metal salts to metal oxides;
-- a second chamber immediately adjoining the first chamber downstream, the second chamber having a particle discharge end, wherein a second heating zone is defined by the second chamber;
-- a second heat source coupled to the second chamber to heat the second heating zone to a second temperature, wherein the second temperature is lower than the first temperature.

According to the present invention, it is thereby advantageously possible to provide a process for recovery of metal oxides from spent acid solutions, wherein the hazards to the environment are significantly reduced. In particular, the spent acids and the water are evaporated and metal oxides are produced from the metal salt particles within a single step in the first heating zone of the first heating chamber of the spray roasting reactor. The residue acids that remain bonded to the metal oxides after the combined evaporation/conversion reaction in the first heating zone are removed from the metal oxides during the dedicated final conversion reaction in the second chamber at a lower second temperature than the first temperature. Therefore, it is advantageously possible with the spray roasting reactor according to the present invention to recover metal oxides from spent acids without producing waste water.

According to a preferred embodiment of the present invention, the first chamber is a combined evaporation/conversion chamber and the second chamber is a dedicated final conversion chamber, wherein each reactor chamber comprises at least one energy input point along the path followed by the solution or the reaction products.

According to the present invention, it is thereby advantageously possible to adjust the temperature in each of the two chambers of the spray roasting reactor separately. Thus, a simple spray roasting reactor is provided which can be flexibly adapted with regard to the throughput speed and/or the quality of the produced metal oxides. In particular, the first heating zone can be adjusted to a first temperature sufficient for evaporation and conversion of the spent acid solution into acid vapours and metal oxide particles in a combined evaporation/conversion reaction. The second chamber can be heated to a second temperature, lower than the first temperature, such that residue acids bonded to the metal oxides are removed from the metal oxides in a dedicated final reaction within a very short retention time, of in particular less than 10 minutes. The spray roasting reactor according to the present invention allows for an enhanced overall control of the metal oxide recovery process without overheating thus obtaining very pure metal oxides of good quality. Moreover, the simple and compact construction of the spray roasting reactor allows for a fast conversion of the spent acid solution thus allowing for a high throughput speed and enhanced recovery process.

According to a preferred embodiment of the present invention, a first rake element is located in the first chamber and/or a second rake element is located in the second chamber, wherein the first rake element and/or second rake element is configured to size and push the metal oxide particles.

According to the present invention, it is thereby advantageously possible to produce metal oxides with uniform sizes and shapes such that the further processing is enhanced. The sizing of the metal oxides during the spray roasting process allows for a further increased throughput speed and a simpler construction, because further means for the sizing of particles after the spray roasting process can be omitted.

According to a preferred embodiment of the present invention, the first chamber and the second chamber are adjoining built-in parts of the spray roasting reactor.

According to the present invention, it is thereby advantageously possible to provide a compact and small device, wherein the first reaction zone and the final reaction zone are integrated into a single reactor. In particular, the first reaction zone and the final reaction zone are only separated by a single wall comprising the opening. Thus, a simple reactor construction is provided that allows for the regeneration of acids and for the recovery of very pure metal oxides.

### BRIEF DESCRIPTION OF THE DRAWINGS

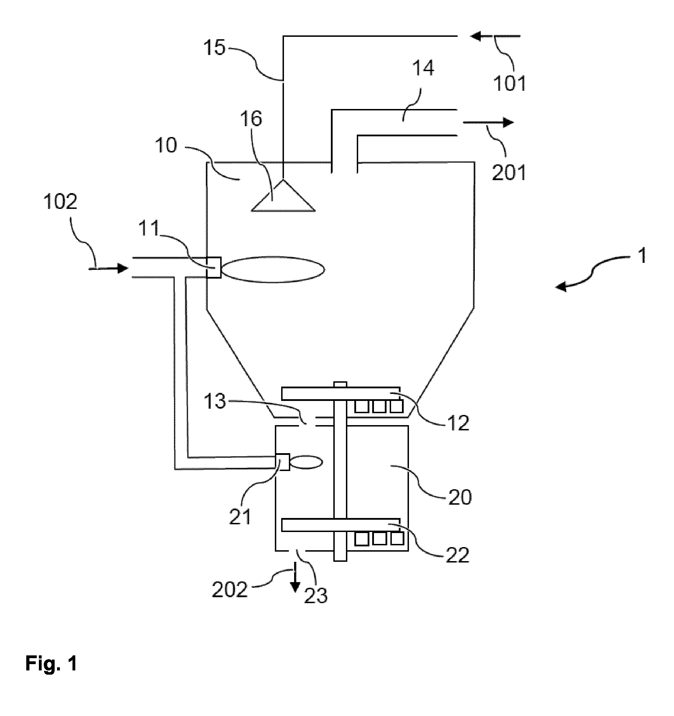

Figure 1 illustrates schematically a reactor for recovery of metal oxide particles from solutions containing metallic salts of these metals.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

**Figure 1** schematically shows an embodiment of the spray roasting reactor 1 according to the present invention for recovery of metal oxides by evaporation and pyrolytic decomposition of a spent acid solution into acids and metal oxides. The spray roasting reactor 1 comprises a first chamber 10 defining a first heating zone and a second chamber 20 defining a second heating zone. The first chamber 10 and the second chamber 20 are integral built-in parts of the spray roasting reactor 1. Preferably, the two chambers 10,20 are separated by a dividing wall comprising a first opening 13.

The spent acid solution, in particular aqueous solution of spent acids, hereinafter also called spent acids, containing HNO₃, and preferably also HF, Fe, Cr, Ni compounds or mixtures of these compounds, are fed into the spray roasting reactor 1 via an inlet pipe 15 or inlet end 15 positioned at the top portion of the first chamber 10 - as illustrated by the arrow 101. Preferably, a nozzle 16 or atomizer 16 is provided for the generation of small, fine, droplets of spent acid solutions in order to enhance the energy absorption efficiency. The first chamber 10 further comprises a first heat source for heating the first chamber 10 or first heating zone 10 to a first temperature sufficient for evaporation and pyrolytic decomposition of the droplets of spent acid solution into exhaust vapours and metal oxide particles in a single step. The exhaust vapours comprise at least water vapour, acid vapour and/or other vapours produced during the heating of the droplets with the first heat source. The exhaust vapours flow to the top portion of the first chamber 10 of the spray roasting reactor 10 and are discharged through the vapour discharge end 14 for further processing to produce regenerated acids from the acid vapour for reuse in various processes - as indicated by arrow 201. The exhaust vapours comprising the acid vapours having a temperature of between 450 °C and 650 °C are discharged and further processed, i.e. passed through a cyclonic separation device, cooled in a Venturi apparatus and the acid vapours absorbed in an absorption column. Due to said temperatures of the exhaust vapour, vaporized iron chloride is decomposed into iron oxide aerosol particles. The reduction of the amounts of iron chloride in the Venturi results into a reduced amount of chloride produced in the reactor. Thus, the chloride remains in the reactor, because of the reduced transfer of dust into the Venturi circuit. In case of other metal compounds than iron chloride, the values of temperatures and/or specific surface area may have variable values. The parameters for the operation of the inventive spray roasting reactor may be adapted to the specific situation accordingly.

In the first heating chamber 10, the spent acid solution is heated to a first temperature, in particular a maximum temperature between 450 °C and 850 °C, preferred between 550 °C and 750 °C, more preferred approximately 650 °C. Preferably the first heat source 11 is operated with air provided by an air supply and fuel or gas provided by a fuel supply as indicated by arrow 102. Thus, the first temperature is sufficient for a combined evaporation/conversion reaction to take place in the first heating zone 10, wherein a complete evaporation of liquids and pyrolytic decomposition into acid vapours and metal oxides takes places. The metal oxide particles fall to the bottom portion of the first chamber, where the particles are sized and pushed by first rake elements 12 disposed in the bottom region of the first chamber 10. Thereby, the metal oxide particles are passed through an opening 13 located at the bottom of the first chamber into the second chamber 20.

In the second chamber 20, the metal oxide particles are heated by a second heat source 21 disposed in the second chamber 20 at a second temperature, wherein the second temperature is lower than the first temperature. In the second chamber 20, a dedicated final reaction takes place at the second temperature being approximately 50 °C to 200 °C lower than the first temperature in the first chamber 10 for the combined evaporation/conversion reaction. Thereby, it is advantageously possible to remove residual acids bonded to the metal oxides such that the quality of the metal oxides is further improved during the dedicated final conversion reaction in the second reaction zone 20. Moreover, overheating of the metal oxides is advantageously avoided such that the quality of the metal oxides is further improved. The spray roasting reactor 1 therefore allows for an enhanced overall control of the metal oxide recovery process by avoiding overheating. Thus, very pure metal oxides of good quality are produced. The simple and compact construction of the spray roasting reactor 1 makes a fast conversion of the spent acid solution possible.

Preferably, second rake elements 22 are disposed at the bottom end of the second chamber 20 for sizing and pushing the metal oxides out of the second chamber 20 of the spray roasting reactor 1through a second opening 23 - as indicated by arrow 202. The sizing of the metal oxides during the spray roasting process by the first rake elements 12 and/or second rake elements 22 allows for a further increased throughput speed and a simpler construction, because further means for the sizing of particles after the spray roasting process can be omitted. Thus, a high throughput speed and enhanced recovery process is provided.

During the combined evaporation/conversion reaction in the first heating zone 10, the metal salt is oxidized. Further, during the dedicated final conversion in the second chamber 20 residue acids bonded to the metal oxides are removed. Thus, due to the spray roasting in two steps, metal oxides of high quality, in particular with a specific surface area of up to 20 m²/g, can be recovered from the spent acid solution in a fast way. In particular, the retention time of the metal oxides during the dedicated final conversion reaction in the second chamber 20 is less than 10 minutes. Preferably, both heat sources 11, 21 are coupled to the same fuel supply comprise an level of excess air of less than 30% such that - due to the reduced amount of air - the dust discharged in further components of the recovery facility are reduced. As compared to known spray roasting reactors, the simplified spray roasting reactor of the present invention allows a construction of the reactor with reduced constructed size, in particular a reduced constructed size between 15 and 25%.

**REFERENCE SIGNS**

| | |
|---|---|
| 1 | Spray roasting reactor |
| 10 | First chamber |
| 11 | First heat source |
| 12 | First rake element |
| 13 | First opening |
| 14 | Vapour discharge end |
| 15 | Inlet end |
| 16 | Atomizer |
| 20 | Second chamber |
| 21 | Second heat source |
| 22 | Second rake element |
| 23 | Particle discharge end |
| 101 | Spent liquid inlet |
| 102 | Fuel inlet |
| 201 | Exhaust vapor discharge |
| 202 | Metal oxides discharge |

## Claims

1. Process for recovering metal oxide particles from a spent acid solution containing metal salts, the process comprising the steps of:
-- spraying the spent acid solution containing the metal salts into an inlet end (15) of a first chamber (10) of a spray roasting reactor (1) to form droplets of the spent acid solution, wherein the first chamber (10) has the inlet end (15) at an upper portion, wherein a first heating zone is defined by the first chamber (10);
-- supplying a first heat source (11) into the first chamber (10) to the first heating zone, and heating the droplets in the first heating zone to a first temperature to evaporate liquid from the droplets to form dry particles of metal salts and to convert the particles of metal salts to particles of metal oxides;
-- directing the particles of metal oxides to a second chamber (20), wherein a second heating zone is defined by the second chamber (20);
-- supplying a second heat source (21) into the second chamber (20) to the second heating zone, wherein the second heating zone is positioned below and downstream of the first heating zone;
-- heating the particles of metal oxides, in the second heating zone, at a second temperature lower than the first temperature for a dedicated final conversion reaction;
-- discharging the particles of meal oxides from the second heating chamber.

2. Process according to claim 1, **characterized in that** a combined evaporation/conversion reaction takes place in the first chamber (10), wherein the first chamber (10) is heated at a maximum temperature between 450 °C and 850 °C, preferred between 550 °C and 750 °C, more preferred approximately 650 °C.

3. Process according to one of the preceding claims, **characterized in that** a dedicated final reaction takes place in the second chamber (20), wherein the second chamber (20) is heated at a temperature that is approximately 50 °C to 200 °C lower than the temperature in the first chamber (10) for the combined evaporation/conversion reaction.

4. Process according to one of the preceding claims, **characterized in that** the energy input is carried out at different points along the path taken by the solution or the reaction products through the spray-roasting reactor (1) for the various stages.

5. Process according to one of the preceding claims, **characterized in that** the particles of metal oxides are sized and pushed from the first heating zone of the first chamber (10) into the second heating zone of the second chamber (20) by first raking elements (12) disposed in the first chamber (10).

6. Process according to one of the preceding claims, **characterized in that** the particles of metal oxides are discharged from the second chamber (20) by second rake elements (22) disposed in the second chamber (20).

7. Spray roasting reactor (1) for recovering metal oxide particles from a spent acid solution, wherein the spray roasting reactor (1) comprises:
-- a first chamber (10) having an inlet end (15) and a vapour discharge end (14), wherein a first heating zone is defined by the first chamber (10);
-- a liquid supply (16) at the inlet end (15) for feeding the spent acid solution containing metal salts into the first chamber (10);
-- a first heat source (11) coupled to the first chamber (10) for heating the spent acid solution in the first heating zone to a first temperature to form metal salts and to convert the metal salts to metal oxides;
-- a second chamber (20) immediately adjoining the first chamber (10) downstream, the second chamber (20) having a particle discharge end (23), wherein a second heating zone is defined by the second chamber (20);
-- a second heat source (21) coupled to the second chamber (20) to heat the second heating zone to a second temperature, wherein the second temperature is lower than the first temperature.

8. Spray roasting reactor (1) according to claim 7, **characterized in that** the first chamber (10) is a combined evaporation/conversion chamber (20) and the second chamber is a dedicated final conversion chamber, wherein each reactor chamber (10, 20) comprises at least one energy input point along the path followed by the solution or the reaction products.

9. Spray roasting reactor (1) according to one of claims 7 or 8, **characterized in that** a first rake element (12) is located in the first chamber (10) and/or a second rake element (22) is located in the second chamber (20), wherein the first rake element (12) and/or second rake element (22) is configured to size and push the metal oxide particles.

10. Spray roasting reactor (1) according to one of claims 7 to 9, **characterized in that** the first chamber (10) and the second chamber (20) are adjoining built-in parts of the spray roasting reactor (1).
